# EUROPEAN PATENT APPLICATION

(11) **EP 4 223 117 A1**
(43) Date of publication of application: **09.08.2023**
(21) Application number: 22155228.4
(22) Date of filing: 04.02.2022
(51) Int. Cl.: A01M 1/02, A01M 1/06, A01M 1/10, A01M 1/04, A01M 1/08

(54) **INSECT CATCHING DEVICE AND METHOD FOR CATCHING FLYING INSECTS**

(71) Applicant: Biogents Aktiengesellschaft, 93055 Regensburg (DE)
(72) Inventor: GEIER, Martin, 92237 Sulzbach-Rosenberg (DE); ROSE, Andreas, 93053 Regensburg (DE); WEBER-GRABAU, Michael, 93055 Regensburg (DE)
(74) Representative: Benninger, Johannes

(57) **Abstract**

The invention relates to an insect catching device (50) and a method for catching flying insects (100), the insect catching device (50) comprising an insect retaining or insect killing enclosure (2); a suction opening (3); a device (15) for producing a suction flow with a suction direction (S) from the suction opening (3) into the enclosure (2); a retaining device (5) assigned with or to the suction opening (3), which retaining device (5) is devised for temporally stationarily retaining the insects (100) prior to transferring the insects (100) into the insect retaining or insect killing enclosure (2) and a detecting device (6) for detecting insects (100), that are temporally retained on the retaining device (5).

## Description

The invention relates to an insect catching device and a method for catching flying insects with the features of the independent claims.

### Prior art

Many species of insects transmit serious and often deadly diseases, cause human and animal suffering and discomfort, attack agricultural crops or destroy natural vegetation. Therefore, in many locations in the world, is necessary to implement control and protection measures to reduce the population of such insects and/or their ability to cause damage or spread disease.

A prime example for such a potentially dangerous insect is the mosquito; several thousand species exist that are exquisitely adapted to their environments and hosts.
mosquitos such as the species *Aedes aegypti* or *Anopheles gambiae* transmit diseases such as dengue fever, zika and malaria. Each year these diseases affect millions of people and kill several 100,000 people, often small children.

Furthermore, mosquitoes can also be a nuisance making outdoor activities difficult or impossible for people in many locations.

To target effective control and protection measures, it is necessary to perform respective surveillance, i.e., determine which species are present at which locations and in which abundances. Commonly, mosquito traps are used for this purpose. Surveillance requires experts and trained technicians to set up and operate the traps as well as to evaluate the catch for the species present within the catch and the quantity of captured mosquitoes. Often, there is "by-catch", i.e., insects other than mosquitoes, which further complicates the task. Mosquito surveillance is therefore a labor-intensive and expensive undertaking and data can only be collected at low spatial and temporal density. Moreover, due to the cost of operating traps in resource-poor locations, surveillance there is often performed using "Human Landing Counts" (HLC) which is ethically questionable considering that the mosquitoes captured this way may carry disease.

With the spread of invasive mosquito species such as *Aedes aegypti* and diseases such as West Nile Virus to new locations as the result of climate change, and species and behaviors of malaria-transmitting *Anopheles* mosquitoes changing as the result of insecticide-treated bednets and resistance to pesticides, the need for surveillance is constantly increasing and it is clear that new approaches are needed.

Current surveillance methods are mostly based on mosquito traps developed in the 1960s. Especially traps using light as lure for the insects are used. Limitations in capture rates of these well-known traps have been overcome by new highly effective traps using chemical lures especially designed for the catching of the insects as described in the European Patent EP 1 521 524 B1.

All known traps are manual traps requiring skilled technicians and scientists to set up, collect the catch bags and analyze and count the content.

Document WO 2019/020694 A1 describes a system and a method for recording and/or monitoring populations of insects, in which insects of a defined genus are lured, at least temporarily retained within a defined space and analyzed with regard to definable characteristics.

### Description

It is an objective of the present invention to provide a novel insect catching device. It is another objective or the present invention to provide means to better discriminate between insects according to specific features.

The above task is solved by an insect catching device and a method for catching flying insects comprising the features in the independent patent claims. Further advantageous embodiments are described by the dependent claims.

The invention describes an insect catching device for catching flying insects by attracting and retaining the flying insects, especially mosquitos or other blood sucking and/or possibly disease carrying insects. The insect catching device comprises at least one insect retaining or insect killing enclosure and a suction opening connected to the at least one enclosure.

Furthermore, the insect catching device comprises a device for producing a suction flow with a suction direction from the suction opening into the at least one enclosure. For the generation of the preferentially downwards directed suction flow the insect catching device comprises a respective ventilation device, a fan or a pump or the like, which sucks in air through the suction opening and directs the sucked in air towards the enclosure.

It may be provided, that by the ventilation device a counter flow of air can be generated, which counter flow generates small air currents with an upward direction in the vicinity of the suction opening. These small air currents, especially together with a further attractant mimic the presence of a human or animal, thereby making the insect catching device even more attractive for these insects.

The insect catching device comprises a retaining device assigned to or associated with the suction opening, which retaining device is devised for temporally stationarily retaining the insects sucked into the insect catching device through the suction opening prior to transferring the insects into the insect retaining or insect killing enclosure.

The insect catching device is furthermore provided with a detecting device for detecting insects or other objects which are temporally stationarily retained on the retaining device.

The insect catching device can be an insect trap, which is placed in some surrounding in order to capture insects. The insect catching device can also be an aspirator, which is usually used mobile. An aspirator is used to selectively capture resting mosquitos and other insects.

The insect catching device can furthermore use at least one attractant to further attract the insects and lure them towards the suction opening. A preferred attractant is carbon dioxide CO₂, which can be provided in a gas cylinder. CO₂ is a well-known attractant for mosquitos as humans and animals emanate CO₂.

Alternatively, or additionally other attractants might be used, like the known human or animal scent lures, pheromones, odors of fresh or rotten fruits or plants or vegetation like flowers in general. Dark surfaces, for example an optical contrast like a black funnel or other structure forming the suction opening or being located close to the suction opening also attracts these insects. Also, optical dark-light contrasts or brightly colored surfaces can serve as attractant. Other good attractants are provided by the use of a counterflowing gentle air current in the vicinity of the suction opening; the use of visible light and/or use of UV light; the use of sound and/or the use raised temperature. Other attractants known to the expert in the field might also be advantageously used together with the insect catching device.

Preferentially the insect catching device comprises a suction duct, which suction duct is connecting the suction opening with the enclosure.

According to a preferred embodiment the retaining device is arranged within the suction duct, especially between the suction opening and the enclosure. According to a preferred embodiment, the retaining device is arranged spaced apart from the suction opening and close to the enclosure.

The retaining device can occupy a retaining position and furthermore at least one unloading position. Preferentially, in the retaining position the retaining device completely covers the suction opening or a cross-sectional area of the suction duct. Meanwhile in the at least one unloading position the retaining device at least partially uncovers the suction opening or the cross-sectional area of the suction duct.

The retaining device is transferred from the retaining position into the at least one unloading position after detection of the retained insects on the retaining device.

The retaining device is at least partially air permeable, especially it comprises an air permeable gate, which gate is covering the suction opening or which gate 10 is covering a cross-sectional area of the suction duct in the retaining position.

The gate is preferentially movably mounted, especially the gate is rotatable mounted and can be flipped or rotated from the retaining position into the at least one unloading position after detection of the retained insects.

Preferentially the gate of the retaining device is flipped or rotated by an angle between 50° and 180°, especially the gate of the retaining device is flipped or rotated by an angle of about 90°.

According to one preferred embodiment the angular difference between the retaining position and the unloading position is between 80° and 90°. For example, the retaining position of the gate is within a horizontal or almost horizontal plane, meanwhile the unloading position of the gate is in a vertical or almost vertical plane.

According to another preferred embodiment the angular difference between the retaining position and the unloading position is between 160° and 180°, especially exactly or almost exactly 180°. According to this example, the retaining position of the gate is within a horizontal or almost horizontal plane, and the unloading position of the gate is also within a horizontal or almost horizontal plane.

In the retaining position of the gate the insects are sucked onto the gate by the suction flow. Especially the sucked in insects are temporally stationarily retained on the gate by the suction flow.

In the unloading position the insects are sucked away from the gate of the retaining device and into the enclosure of the insect catching device.

The enclosure might contain means or devices for killing the insects sucked into the enclosure.

The enclosure can, for example, be formed by a closed netting, which netting encloses the free end of the suction duct opposite to the suction opening. It is provided that the insects cannot escape from the enclosure. This ensures that each insect is only detected once by the detecting device of the insect catching device.

Before the retaining device is transferred from the retaining position into the unloading position, the detecting device detects all the insects retained on the retaining device.

According to one embodiment, the detecting device is an imaging device, especially a camera with image evaluation system. The imaging device acquires images of the gate and any objects, especially insects deposited and temporally stationary retained on the gate.

The immobility of the insects retained on the retaining device is very advantageous for the detection by the detecting device Especially the immobile insects can be easily imaged by one or more cameras mounted in one or more locations with a view of the retaining device. It is also possible to keep the retaining device in the retaining position for a certain period of time and thereby capture several insects.

The retaining device is well-defined in its location and size within the insect catching device and preferentially the retaining device provides a flat surface. It is therefore possible to position one or more cameras in convenient locations and adjust and focus them to take high-quality images with inexpensive imaging sensors and cameras, such as devices used in smartphones and webcams.

Preferentially the insect catching device can comprise a control unit, which control unit is associated with the detecting device and with the retaining device. The control unit especially controls the transfer of the retaining device from the retaining position into the at least one unloading position after detection of the temporally stationarily retained insects on the retaining device.

Preferentially it is provided that the control unit triggers the recording of an image by the camera and immediately afterwards triggers the movement of the retaining device in order to unload the temporally stationarily retained insects into the enclosure.

The control unit is preferentially a computing device with means to capture, count and classify the captured insects, especially mosquitoes and non-mosquito objects.

According to an embodiment the control unit comprises computing means with at least on processor; working memory such as RAM; persistent storage such as flash to hold program instructions and machine learning models; and at least one camera interface.

The acquired images can be processed by image processing means in several ways:
- removing the images of the retaining means;
- extracting sub-images of individual mosquitoes and other insects and objects;
- counting captured mosquitoes and other insects or objects;
- generating mosquito images for labeling;
- creating a library for training artificial intelligence and machine learning system such as neural networks to generate models for field deployment;
- using the models to identify unknowns.

These means may be provided locally, for example by the control unit or within a cloud as described below.

Furthermore, the insect catching device may comprise at least one illumination element, which is preferentially being associated with the retaining device. Especially the illumination element is used to illuminate the gate.

The illumination can be a further attracting stimulus for the insects.

The illumination can also be advantageously used to assist the detection of the temporally stationarily retained insects. For example, illumination might be necessary to acquire respective images with the camera during darkness. Conveniently, the illumination is only needed for the short period of taking an image.

The illumination element can comprise at least one LED and/or at least one incandescent light source and/or a UV light source. The illumination may be infrared, UV, white or RGB LEDs, or a combination of several colors, to image characterizing features of the insects or mosquitoes in different wavelength ranges.

This also allows the identification of distinctive features characteristic for different species of mosquitoes. For example, *Culex quinquefasciatus* show a reddish-brown body color while *Aedes aegypti* are colored black and white. Other distinctive features like bushy antennae might be used to distinguish between male mosquitos and female mosquitos.

Specifically, UV illumination can be used to differentiate mosquitoes marked with a fluorescent substance from unmarked mosquitoes. This is of great importance for Sterile Insect Technology (SIT), where marked sterile males are released to determine their flight range.

Other illumination elements are a laser, structured lighting or Lidar (the latter also suited for image acquisition). Lidar stands for "light detection and ranging" and is a method related to radar ("radiowave detection and ranging") for remote measurement of atmospheric parameters. Lidar systems emit laser pulses and detect the light scattered back from the atmosphere.

Preferentially the acquired images are time-stamped so that the date and time of mosquito activity is preserved. Also, geo-coordinates can be added to the images. Local environmental parameters including but not limited to temperature, humidity, wind and ambient light at the time of the capture can also be measured by respective sensors (not shown) and stored.

Furthermore, the insect catching device may comprise at least one communication device, especially a wireless communication device, that is preferentially capable of transmitting images. The communication device might include but is not limited to Bluetooth, Wi-Fi, cellular communication or LORA. LORA is a low-power wide-area network (LPWAN) technology, which uses chirp spread spectrum (CSS) technology for signal transmission.

Wi-Fi, cellular and similar networks have the advantage of being able to transfer images for review and off-line analysis. In one embodiment, the wireless communication device comprises Bluetooth and one other communication means to allow communication with both a smartphone and a cloud.

Especially cloud storage means and cloud computing for data analysis and user viewing of data may be advantageously provided for assessing the acquired data from far away.

In order to operate the insect catching device usually a power source is necessary. This can be an independent power source like a battery or a power source connected to a power line.

The insect catching device is preferentially provided for taking images of insects and other objects entering the insect catching device for the purpose of counting, identification, and classification.

Objects entering the insect catching device comprise targets and non-targets. Targets are, for example, insects like mosquitoes, meanwhile non-targets are, for example, other insects, by-catch, plant matter, pollen, sand, rain etc. The detecting device together with the control unit is able to distinguish target objects from non-targets.

In summary, as the insects approach the insect catching device, especially the suction opening, they get sucked in and are transported towards the enclosure. Various insect catching device configurations and mounting schemes are conceivable for the technical expert, for example the use of a so-called gravid trap, which is designed to attract gravid mosquitoes looking for places to lay their eggs.

Furthermore, the insect catching device may optionally be equipped with a sensor that senses when a target or non-target enters the insect catching device and sends a signal to the control unit and/or the detection device, thereby activating the control unit and/or the detection device. For example, a counting sensor as described in WO 2019/020694 A1 can be used.

In order to transfer the retaining device between the retaining position and the at least one unloading position, the retaining device might be rotatable around a rotational axis.

According to a preferred embodiment, the suction opening and/or the suctional duct each comprise a circular cross-sectional area. The retaining device located in its retaining position especially completely covers this cross-sectional area. By rotation around the rotational axis, which rotational axis is formed along a diameter of the retaining device in the retaining position, the retaining device is rotated by at least 90°. Especially the retaining device is rotated by 180°, thereby changing the position of the upper side and the lower side. After this 180° rotation the suction flow does not retain the mosquitos on the retaining device anymore but instead sucks them away, thereby transferring them into the enclosure.

For the purpose of the rotation a rotation handle may be provided. The rotation handle can especially by driven by a respective drive, which drive is preferentially actuated by the control unit. For certain aspects a manual rotation of the rotation handle might also be advantageously used.

After one or more images are taken, or after a certain time period has elapsed, the retaining device is flipped about the rotation into the unloading position, in which the insects are now exposed to the suction flow.

It will be obvious to anybody skilled in the art that the retaining device can be provided using a variety of materials and movements. For example, the retaining device could alternatively be a sticky tape, which is moving from the retaining position to the unloading position.

There are several different possibilities for a suitable retaining device, including but not limited to:
- at least partially perforated gate with a rotation function = flip gate;
- perforated and/or sticky conveyor in which said unload function involves moving a section with retained insects away from the retaining position;
- any other possibility, in which said retaining function or unloading function comprises additional airflows or changing the suction flow etc.

In this context "perforation" or "at least partially air permeable" comprises any surface with at least one opening to pass the suction airflow, including mesh or drilled holes.

A person skilled in the art will also realize that a retaining device according to the invention may also comprise an unperforated landing surface and means for changing or redirecting the suction flow to the sides after at least some of the insects entrapped in the suction flow have landed on the surface.

Another embodiment may provide that the retaining device can occupy at least to different unloading positions, wherein each unloading position is associated with an individual catching enclosure. Depending on which unloading position the retaining device occupies, the respectively retained insects are sorted into the different catching enclosure accordingly.

Especially the retaining device is transferred into the different unloading positions under the control of the control unit according to the data acquired by the detection device.

For example, a drive for a retaining device formed as a gate may be provided, which drive can rotate the gate about 90° clockwise into a first unloading position or which drive can rotate the gate about 90° counter-clockwise in a unloading position. Each unloading position is associated with a separate catching enclosure. This allows for the sorting of the captured insects by respectively selecting the direction in which the gate is rotated.

The insect capturing device described here can advantageously be used to automate the surveillance process in scientific studies or the like.

The invention furthermore relates to a method for catching flying insects, especially for catching flying insects with an insect catching device as described above, wherein the insects are sucked in through a suction opening of the insect catching device, wherein the insects are temporarily stationarily retained on a retaining device associated with the suction opening, wherein the insects retained on the retaining device are detected by a detecting device and wherein after detection the insects are transferred into an enclosure of the insect catching device, in which enclosure the insects are retained and/or killed.

It should be expressly mentioned at this point that all aspects and embodiments which have been explained in connection with the device according to the invention equally concern or can be partial aspects of the method according to the invention. Therefore, if at any point in the description or also in the claim definitions relating to the device according to the invention reference is made to certain aspects and/or interrelationships and/or effects, this applies equally to the method according to the invention. The same applies in reverse, so that all aspects and embodiments which have been explained in connection with the method according to the invention also equally concern or can be partial aspects of the device according to the invention. Therefore, if at any point in the description or also in the claim definitions relating to the method according to the invention reference is made to certain aspects and/or interrelationships and/or effects, this applies equally to the device according to the invention

### Description of the drawings

In the following passages, the attached figures further illustrate exemplary embodiments of the invention and their advantages. The size ratios of the individual elements in the figures do not necessarily reflect the real size ratios. It is to be understood that in some instances various aspects of the invention may be shown exaggerated or enlarged to facilitate an understanding of the invention.
Figures 1A and 1B show an insect catching device according to the invention.
Figures 2A and 2B show retaining device of the insect catching device.
Figures 3A an 3B show another exemplary embodiment of retaining device of the insect catching device.
Figure 4 shows a further example of an insect catching device.

The same or equivalent elements of the invention are designated by identical reference characters. Furthermore, and for the sake of clarity, only the reference characters relevant for describing the respective figure are provided. It should be understood, that the embodiments described are only examples describing an embodiment of the device and/or method according to the invention. They are not intended to limit the scope of the disclosure.

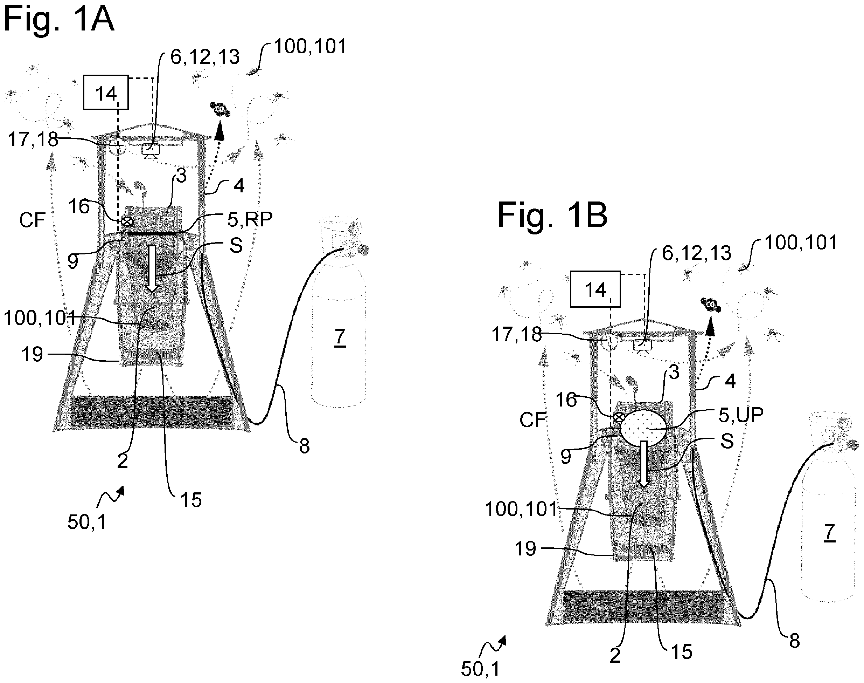

Figures 1A and 1B show an insect catching device 50 according to the invention, especially an insect trap 1. The insect trap 1 is for attracting and retaining flying insects 100, especially for mosquitos 101 or other blood sucking and/or possibly disease carrying insects. The insect trap 1 comprises an insect retaining or insect killing enclosure 2 and a suction opening 3 connected to the enclosure 2.

Furthermore, the insect trap 1 comprises a device for producing a suction flow with a suction direction S from the suction opening 3 into the enclosure 2. For the generation of the downwards directed suction flow the insect catching device 50 preferentially comprises a fan 15 or pump or the like, which sucks in air through the suction opening 3 towards the enclosure 2.

Furthermore, by the fan 15 a counter flow CF can be generated, which counter flow CF generates small air currents in the vicinity of the suction opening 3. These small air currents, especially together with the attractant 4 described below mimic the presence of a human or animal.

The insect trap 1 comprises a retaining device 5 assigned to or associated with the suction opening 3, which retaining device 5 is devised for temporally stationarily retaining the insects 100 prior to transferring the insects 100 into the insect retaining or insect killing enclosure 2.

The insect trap is also provided with a detecting device 6 for detecting insects 100 which are temporally stationarily retained on the retaining device 5.

The insect trap 1 can furthermore use an attractant 4 to attract the insects 100 and lure them towards the suction opening 3. According to the shown embodiment the attractant 40 used is carbon dioxide CO₂ which is provided in a gas cylinder 7. The CO₂ gas is introduced into the insect trap 1 via a connecting line 8 and released close to the suction opening 3.

Alternatively, or additionally other attractants might be used, like the known human or animal scent lures, pheromones, odors of fresh or rotten fruits or plants or vegetation like flowers in general. Dark surfaces, for example an optical contrast like a black funnel or other structure forming the suction opening 3 or being located close to the suction opening 3 also attracts these insects 100. Also, optical dark-light contrasts or brightly colored surfaces can serve as attractant. Other good attractants are provided by the use of a counterflowing gentle air current in the vicinity of the suction opening 3; the use of visible light and/or use of UV light; the use of sound and/or the use raised temperature. Other attractants known to the expert in the field might also be advantageously used together with the insect catching device 50.

Preferentially the insect trap 1 comprises a suction duct 9, which suction duct 9 is connecting the suction opening 3 with the enclosure 2.

According to a preferred embodiment the retaining device 5 is arranged within the suction duct 9, especially between the suction opening 3 and the enclosure 2. Preferentially the retaining device 5 is arranged spaced apart from the suction opening 3 and close to the enclosure 2.

The retaining device 5 can occupy a retaining position RP and furthermore at least one unloading position UP. Preferentially, in the retaining position RP the retaining device 5 covers the suction opening 3 or a cross-sectional area of the suction duct 9. Meanwhile in the at least one unloading position UP the retaining device 5 at least partially uncovers the suction opening 3 or the cross-sectional area of the suction duct 9.

The retaining device 5 is transferred from the retaining position RP into the at least one unloading position UP after detection of the retained insects 100 on the retaining device 5.

The retaining device 5 is at least partially air permeable, especially it comprises an air permeable gate 10, which gate 10 is covering the suction opening 3 or which gate 10 is covering a cross-sectional area of the suction duct 9.

The gate 10 is movably mounted, especially the gate 10 is rotatable mounted and can be flipped or rotated from the retaining position RP into the at least one unloading position UP after detection of the retained insects 10.

Preferentially the gate 10 of the retaining device 5 is flipped or rotated by an angle between 50° and 180°, especially the gate 10 of the retaining device is flipped or rotated by an angle of about 90°.

According to one preferred embodiment the angular difference between the retaining position RP and the unloading position UP is between 80° and 90°. For example, the retaining position RP of the gate 10 is within a horizontal or almost horizontal plane, meanwhile the unloading position UP of the gate 10 is in a vertical or almost vertical plane.

According to another preferred embodiment the angular difference between the retaining position RP and the unloading position UP is between 160° and 180°, especially exactly or almost exactly 180°. According to this example, the retaining position RP of the gate 10 is within a horizontal or almost horizontal plane, and the unloading position UP of the gate 10 is within a horizontal or almost horizontal plane as well.

In the retaining position RP of the gate 10 the insects 100 are sucked onto the gate 10 by the suction flow. Especially the insects 100 are retained on the gate 10 by the suction flow.

In the unloading position UP the insects 100 are sucked away from the gate 10 of the retaining device 5 and into the enclosure 2.

The enclosure 2 might contain means or devices for killing the insects 100 sucked into the enclosure 2.

According to the embodiment shown in figure 1 the enclosure 2 is formed by a closed netting 11, which encloses the free end of the suction duct 9 opposite the suction opening 3. The insects 100 cannot escape from the enclosure 2. This ensures that each insect 100 is only detected once by the detecting device 6.

Before the retaining device 5 is transferred from the retaining position RP to the unloading position UP, the detecting device 6 detects all the insects 100 retained on the retaining device 9.

According to one embodiment, the detecting device 6 is an imaging device 12, especially a camera 13 with image evaluation system. The imaging device 12 acquires images of the gate 10 and any objects, especially insects 100 deposited and temporally stationary retained on the gate 10.

Preferentially the insect catching device 50 can comprise a control unit 14, which control unit 14 is associated with the detecting device 6 and with the retaining device 5. The control unit 14 especially controls the transfer of the retaining device 5 from the retaining position RP into the at least one unloading position UP after detection of the temporally stationarily retained insects 100 on the retaining device 5. Preferentially it is provided that the control unit 14 triggers the recording of an image by the camera 13 and immediately afterwards triggers the movement of the retaining device 5 in order to unload the temporally stationarily retained insects 100 into the enclosure 2.

The control unit 14 is preferentially a computing device with means to capture, count and classify the captured insects 100, especially mosquitoes and non-mosquito objects.

According to an embodiment the control unit 14 comprises computing means with at least on processor; working memory such as RAM; persistent storage such as flash to hold program instructions and machine learning models; and at least one camera interface.

The acquired images can be processed by image processing means in several ways:
- removing the images of the retaining means;
- extracting sub-images of individual mosquitoes 101 and other insects 100 and objects;
- counting captured mosquitoes 101 and other insects 100 or objects;
- generating mosquito images for labeling;
- creating a library for training artificial intelligence and machine learning system such as neural networks to generate models for field deployment;
- using the models to identify unknowns.

These means may be provided locally, for example by the control unit 14 or within a cloud as described below.

Furthermore, the insect catching device 50 may comprise at least one illumination element 16, which is preferentially being associated with the retaining device 5. Especially the illumination element 16 is used to illuminate the gate 10.

The illumination can be a further attracting stimulus for the insects 100.

The illumination can also be advantageously used to assist the detection of the temporally stationarily retained insects. For example, illumination might be necessary to acquire respective images with the camera 13 during darkness.

The illumination element 16 can comprise at least one LED and/or at least one incandescent light source and/or a UV light source.

The retaining device 5 is well-defined in its location and size within the insect catching device 50 and preferentially the retaining device 5 provides a flat surface. It is therefore possible to position one or more cameras 13 in convenient locations and adjust and focus them to take high-quality images with inexpensive imaging sensors and cameras, such as devices used in smartphones and webcams. In the embodiment shown in figure 1 a camera 13 is mounted above the suction opening 3.

Illumination elements 16 may advantageously be provided, as insects 100, especially mosquitoes 101, are often active in the dark. Conveniently, the illumination is only needed for the short period of taking an image. The illumination may be infrared, UV, white or RGB LEDs, or a combination of several colors, to image characterizing features of the insects 100 or mosquitoes 101 in different wavelength ranges. This allows the identification of distinctive features characteristic for different species of mosquitoes 101. For example, *Culex quinquefasciatus* show a reddish-brown body color while *Aedes aegypti* are colored black and white. Other distinctive features like bushy antennae might be used to distinguish between male mosquitos 101m and female mosquitos 101f.

Specifically, UV illumination can be used to differentiate mosquitoes 101 marked with a fluorescent substance from unmarked mosquitoes 101. This is of great importance for Sterile Insect Technology (SIT), where marked sterile males are released to determine their flight range.

Other illumination elements 16 are a laser, structured lighting or Lidar (the latter also suited for image acquisition).

Preferentially the acquired images are time-stamped so that the date and time of mosquito activity is preserved. Also, geo-coordinates can be added to the images. Local environmental parameters including but not limited to temperature, humidity, wind and ambient light at the time of the capture can also be measured by respective sensors (not shown) and stored.

Furthermore, the insect catching device 50 may comprise at least one communication device 17, especially a wireless communication device 18, that is preferentially capable of transmitting images. The communication device 17 might include but is not limited to Bluetooth, Wi-Fi, cellular communication or LORA. Wi-Fi, cellular and similar networks have the advantage of being able to transfer images for review and off-line analysis. In one embodiment, the wireless communication device 18 comprises Bluetooth and one other communication means to allow communication with both a smartphone and a cloud.

Especially cloud storage means and cloud computing for data analysis and user viewing of data may be advantageously provided for assessing the acquired data from far away.

In order to operate the insect catching device 50 usually a power source (not shown) is necessary. This can be an independent power source like a battery or a power source connected to a power line.

The insect catching device 50 is preferentially provided for taking images of insects 100 and other objects entering the insect catching device 50 for the purpose of counting, identification, and classification.

Objects entering the insect catching device 50 comprise targets and non-targets. Targets are, for example, insects 100 like mosquitoes, meanwhile non-targets are, for example, other insects, by-catch, plant matter, pollen, sand, rain etc. The detecting device 6 together with the control unit 14 is able to distinguish target objects from non-targets.

In summary, as the insects 100 approach the insect catching device 50, especially as the insects 100 approach the suction opening 3, they get sucked in and are transported down the suction duct 9 towards the enclosure 3. If the netting 11 is not present, they get sucked through the fan 15 into the cone-shaped, perforated outer trap body 19. Various insect trap 1 configurations and mounting schemes are conceivable for the technical expert, for example the use of a so-called gravid trap, which is designed to attract gravid mosquitoes looking for places to lay their eggs.

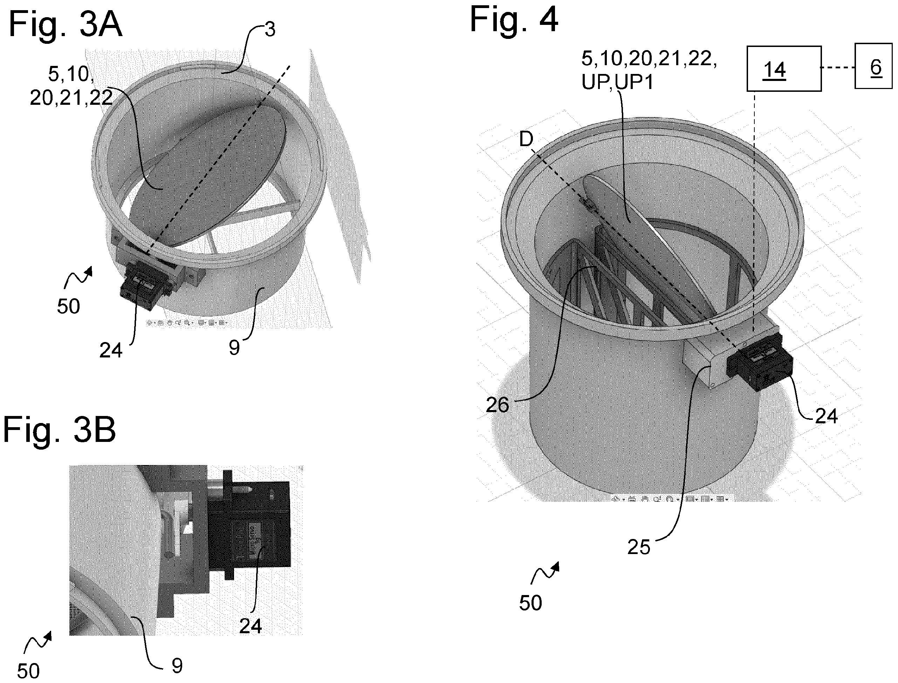

Furthermore, the insect catching device 50 may optionally be equipped with a sensor (not shown) that senses when a target or non-target enters the insect catching device 50 and sends a signal to the control unit 14 and/or the detecting device 6. For example, a counting sensor as described in WO 2019/020694 A1 can be used (see figures 3A and 3B).

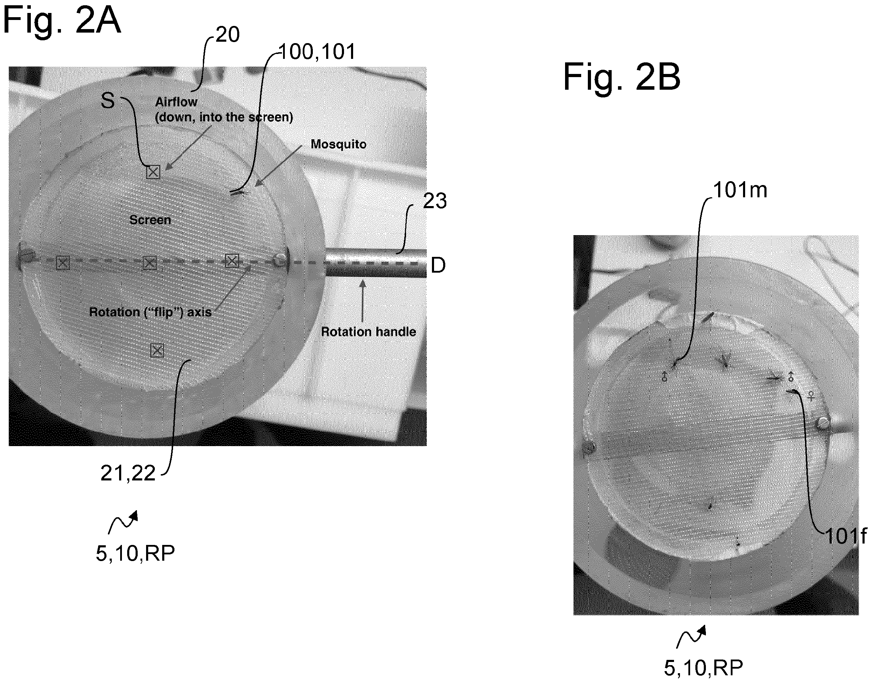

Figures 2A and 2B show an exemplary embodiment of retaining device 5 of a insect catching device. Hereby, the retaining device 5 comprises a circular element 20, which circular element 20 has a diameter large enough to cover the suction opening in the retaining position RP or to completely fill a cross-sectional area of the suction duct in the retaining position RP.

At least a part of the circular element 20 is made of an air permeable material 21, especially it is formed of an air permeable mesh 22. The at least partially air permeable circular element 20 forms the gate 10 of the retaining element 5.

The mesh 22 especially comprises openings sufficiently small to retain insects 100, especially mosquitos 101, but with enough open area to let through all or part of the suction flow. Insects 100 and/or mosquitoes 101 entrapped in the suction flow will be stopped by the retaining device 5 in the retaining position RP. Especially the entrapped insects 100 will be temporally stationarily retained on the retaining device 5, where they are unable to move because of the downward directed suction flow S.

This immobility of the retained insects 100 is very advantageous for the detection by the detecting device (not shown). Especially the immobile insects 100 can be easily imaged by one or more cameras mounted in one or more locations with a view of the gate 10. It is also possible to keep the gate 10 in the retaining position RP for a certain period of time and thereby capture several insects 100, especially mosquitoes 101 (Figure 2B).

After one or more images are taken, or after a certain time period has elapsed, the gate 10 is flipped about a rotational axis D shown schematically in Figure 2A to the unloading position (not shown). For this purpose, a rotation handle 23 may be provided. The rotation handle 23 can especially by driven by a respective drive, for certain aspects a manual rotation of the rotation handle 23 might also be advantageously used.

In the unloading position the insects 100 are now exposed to the suction flow. The suction flow will flush off the insects 100 from surface of the air permeable section, especially the suction flow will flush off the insects 100 from the mesh 22 and the insects 100 will be transferred into the enclosure (not shown).

According to a preferred embodiment the retaining device 5 may be flipped or rotated by 180 degrees. In this case, this new orientation may be the next retaining position. Otherwise, especially of the retaining device 5 is rotated by less than 180°, the gate 10 is returned to the retaining position RP. The insect catching device is now ready for the next capture of insects 100.

Especially the retaining device 5 provides a landing surface for the insects 100, which landing surface is in view of the detecting device 6. Furthermore, the retaining position RP and the unloading position UP are important features of the retaining device.

It will be obvious to anybody skilled in the art that the retaining device 5 can be provided using a variety of materials and movements. For example, the retaining device 5 could alternatively be a sticky tape, which is moving from the retaining position to the unloading position.

There are several different possibilities for a suitable retaining device 5, including but not limited to:
- at least partially perforated gate 10 with a rotation function = flip gate
- perforated and/or sticky conveyor in which said unload function involves moving a section with retained insects 100 away from the sensing retaining position
- any other possibility, in which said retaining function or unloading function comprises additional airflows or changing the suction flow etc.

In this context "perforation" or "at least partially air permeable" comprises any surface with at least one opening to pass the suction airflow, including mesh or drilled holes.

A person skilled in the art will also realize that a retaining device 5 according to the invention may also comprise an unperforated landing surface and means for changing or redirecting the suction flow to the sides after at least some of the insects 100 entrapped in the suction flow have landed on the surface.

Figures 3A and 3B show part of another exemplary embodiment of retaining device 5 of an insect catching device 50. Especially the suction opening 3, the suction duct 9 and the retaining device 5 located within the suction duct 9 are shown in detail.

The retaining device 5 is formed by an at least partially air permeable circular element 20, which circular element 20 is especially made out of an air permeable mesh 22. The circular element 20 forms a gate 10 which can be rotated about a rotational axis D. In Figure 3A the gate 10 is shown in a position between a retaining position, in which retaining position the gate 10 would completely cover the cross-sectional area of the suction duct 9, and the unloading position. Especially the circular element 20 is only partially rotated between the retaining position and the unloading position.

Preferentially in the embodiment shown in Figures 3A and 3B within the retaining position and within the unloading position the gate 10 in each case is located within a horizontal plan. This means that the gate is flipped about 180° from the retaining position into the unloading position.

Furthermore, the embodiment according to figures 3A and 3B show the use of a counting sensor 24 as described in WO 2019/020694 to senses when a target or non-target enters the insect catching device 50 and which preferentially sends a signal to the control unit and/or the detecting device of the insect catching device 50.

Figure 4 shows a further example of a part of an insect catching device 50. As in figure 3A the suction opening 3, the suction duct 9 and the retaining device 5 located within the suction duct 9 are shown in detail, while the other parts of the insect catching device 50 are omitted.

In this embodiment it is provided that the gate 10 can be directionally rotated according to the insects 100 detected. Especially the gate 10 is rotated under the control of the control unit 14 according to the data acquired by the detecting device 6.

For this purpose, a drive 25 for the gate 10 is provided, which can rotate the gate 10 about 90° clockwise in a first unloading position UP1 or which can rotate the gate 10 about 90° counter-clockwise in a unloading position (not shown).

Each unloading position UP is associated with a separate catching enclosure (not shown). This allows for the sorting of the captured insects by respectively selecting the direction in which the gate 10 is rotated.

In the shown embodiment a frame structure 26 is provided, which frame structure 26 prevents the gate 10 from rotating more than 90° clockwise or counterclockwise and therefor guaranties the correct sorting of the captured insects into the respective catching enclosure.

The embodiments, examples and variations of the preceding paragraphs, the claims or the following description and the figures, including their various views or respective individual features, may be used independently or in any combination. Features described in connection with one embodiment are applicable to all embodiments unless the features are incompatible.

Although the figures generally refer to "schematic" representations and views, this does not mean that the figure representations and their description are of secondary importance with respect to the disclosure of the invention. The person skilled in the art is quite capable of obtaining enough information from the schematically and abstractly drawn representations to facilitate his understanding of the invention without being impaired in any way in his understanding, for example, by the drawn and possibly not exactly to scale proportions of the insect catching device 50 and/or parts of the insect catching device 50 or other drawn elements. The figures thus enable the skilled person as a reader to derive a better understanding of the idea of the invention formulated in a more general and/or abstract manner in the claims as well as in the general part of the description on the basis of the more concretely explained implementations of the process according to the invention and the more concretely explained mode of operation of the device according to the invention.

The invention has been described with reference to preferred embodiments. To the expert it is also conceivable, however, to make changes and modifications without leaving the scope of protection of the appended claims.

### List of reference numbers:

- 1: insect trap
- 2: insect retaining or insect killing enclosure
- 3: suction opening
- 4: attractant
- 5: retaining device
- 6: detecting device
- 7: gas cylinder
- 8: connecting line
- 9: suction duct
- 10: air permeable gate
- 11: netting
- 12: imaging device
- 13: camera
- 14: control unit
- 15: fan
- 16: illumination element
- 17: communication device
- 18: wireless communication device
- 19: trap body
- 20: circular element
- 21: air permeable material
- 22: air permeable mesh
- 23: rotation handle
- 24: counting sensor
- 25: drive
- 26: frame structure
- 50: insect catching device
- 100: insects
- 101: mosquitos
- 101m: male mosquito
- 101f: female mosquito
- CF: counter flow
- D: rotational axis
- RP: retaining position
- S: suction direction
- UP: unloading position
- UP1: first unloading position

## Claims

1. Insect catching device (50) for catching flying insects (100), comprising:
an insect retaining or insect killing enclosure (2);
a suction opening (3);
a device (15) for producing a suction flow with a suction direction (S) from the suction opening (3) into the enclosure (2);
a retaining device (5) assigned with or to the suction opening (3), which retaining device (5) is devised for temporally stationarily retaining the insects (100) prior to transferring the insects (100) into the insect retaining or insect killing enclosure (2);
a detecting device (6) for detecting insects (100), that are temporally retained on the retaining device (5).

2. Insect catching device (50) according to claim 1, which Insect catching device (50) comprises a suction duct (9) connecting the suction opening (3) with the enclosure (2).

3. Insect catching device (50) according to claim 2, wherein the retaining device (5) is arranged within the suction duct (9).

4. Insect catching device (50) according to one of the previous claims, wherein the retaining device (5) can occupy a retaining position (RP) and at least one unloading position (UP).

5. Insect catching device (50) according to claim 4, wherein the retaining device (5) is transferred from the retaining position (RP) into the at least one unloading position (UP) after detection of the stationarily retained insects (100) on the retaining device (5).

6. Insect catching device (50) according to one of the previous claims, wherein the retaining device (5) comprises an air permeable gate (10), which gate (10) is covering the suction opening (3) or which gate (10) is covering a cross-sectional area of the suction duct (9).

7. Insect catching device (50) according to claim 6, wherein the gate (10) is movably mounted, especially wherein the gate (10) is rotatable, especially wherein the gate (10) is flipped or rotated from the retaining position (RP) into the at least one unloading position (UP) after detection of the stationarily retained insects (100).

8. Insect catching device (50) according to claim 7, wherein the gate (10) of the retaining device (5) is flipped or rotated by an angle between 50° and 180°, especially wherein the angular difference between the retaining position (RP) and the unloading position (UP) is between 80° and 90° or wherein the angular difference between the retaining position (RP) and the unloading position (UP) is between 160° and 180° or wherein the angular difference between the retaining position (RP) and the unloading position (UP) is 90° or 180°.

9. Insect catching device (50) according to one of the claims 5 to 8, wherein the insects (100) retained on the retaining device (5) are sucked into the enclosure (2) while or after the retaining device (5) is transferred from the retaining position (RP) into the at least one unloading position (UP).

10. Insect catching device (50) according to one of the previous claims, wherein the detecting device (6) is an imaging device (12), especially a camera (13) with image evaluation system.

11. Insect catching device (50) according to one of the previous claims, further comprising a control unit (14), which is associated with the detecting device (6) and with the retaining device (5), especially which control unit (14) controls the transfer of the retaining device (5) from the retaining position (RP) into the at least one unloading position (UP) after detection of the retained insects (100) on the retaining device (5).

12. Insect catching device (50) according to one of the previous claims, further comprising at least one illumination element (16) associated with the retaining device (5).

13. Insect catching device (50) according to one of the previous claims, further comprising a communication device (17), especially a wireless communication device (18), preferentially a wireless communication device (18) capable of transmitting images.

14. Insect catching device (50) according to one of the previous claims, further comprising an attractant (4) to attract insects (100) towards the suction opening (3); especially in which the attractant (4) comprises at least one of the following: carbon dioxide; human scent lure; dark surface; optical contrast, dark/light contrast; counterflow; gentle air currents in the vicinity of the suction opening (3); visible light; UV light; heat, sound, odors of fruits or vegetation; pheromones; bright colored surfaces.

15. Method for catching flying insects (100), especially for catching flying insects (100) with an insect catching device (50) according to one of the claims 1 to 13, wherein the insects (100) are sucked in through a suction opening (3) of the insect catching device (50), wherein the insects (100) are temporarily stationarily retained on a retaining device (5) associated with the suction opening (3), wherein the insects (100) retained on the retaining device (5) are detected by a detecting device (6) and wherein after detection the insects (100) are transferred into an enclosure (2) of the insect catching device (50), in which enclosure (2) the insects (100) are retained and/or killed.
